# DEMANDE DE BREVET EUROPEEN

(11) **EP 1 867 898 A1**
(43) Date de publication de la demande: **19.12.2007**
(21) Numéro de dépôt: 07301092.8
(22) Date de dépôt: 07.06.2007
(51) Int. Cl.: F16H 63/22

(54) **Boite de vitesses robotisée à changement de vitesses sous couple**

(30) Priorité: 14.06.2006 WO PCT/FR2006/052124
(71) Demandeur: PEUGEOT CITROËN AUTOMOBILES S.A., 78140 Velizy Villacoublay (FR)
(72) Inventeur: Le Dren, Arnaud, 92130 Montgeron (FR); Mitchell, Clément, 92250 La Garenne Colombes (FR); De Croutte, Arnaud, 78530 Buc (FR)

(57) **Abrégé**

L'invention concerne une boîte de vitesses comprenant au moins une fourchette (12) mobile en translation parallèlement à un axe (AX), et un organe de commande comprenant un corps (2) pourvu d'au moins une gorge (5-10) dans laquelle est engagé un doigt de la fourchette (12), pour déplacer cette fourchette en translation selon la direction (AX) sur déplacement de l'organe de commande.

Le corps (2) de l'organe de commande porte un coulisseau (3) mobile parallèlement à l'axe (AX) entre au moins deux positions, ce coulisseau (3) portant au moins un masque (25-30) apte à couvrir partiellement la gorge (5-10) pour définir complémentairement avec cette gorge au moins deux pistes formant des chemins différents pour guider le doigt (D8), selon que ce coulisseau (3) occupe une première ou une seconde position.

L'invention s'applique notamment aux boîtes de vitesses robotisées.

## Description

L'invention concerne une boîte de vitesses robotisée à changement de vitesses sous couple et s'intéresse plus particulièrement à la commande d'une telle boîte.

Une telle boîte de vitesses, connue notamment du document WO2004099654, permet d'effectuer des changements de rapport instantanés sous couple, c'est-à-dire durant lesquels la transmission d'un couple par la boîte de vitesses n'est pas interrompue au cours des changements de rapport.

Selon cette architecture connue, chaque roue dentée est solidarisable en rotation par rapport à l'arbre qui la porte par deux demi-crabots. Chaque demi-crabot, lorsqu'il est engagé seul dans une roue dentée, la bloque en rotation par rapport à l'arbre qui la porte, uniquement dans un sens de rotation, en définissant avec celle-ci une liaison de type roue libre.

Les deux demi-crabots d'une même paire, appelés dans la suite demi-crabot montant et demi-crabot descendant, sont aptes à bloquer une roue dentée dans deux sens de rotation opposés, par rapport à l'arbre qui porte cette roue.

Ainsi, c'est lorsque ces demi-crabots sont tous deux engagés dans la roue dentée, que celle-ci est complètement solidaire en rotation de l'arbre qui la porte. L'engagement complet d'un rapport se déroule en deux temps.

Par exemple, l'engagement du second rapport, dans un sens montant, c'est-à-dire partant du premier rapport, est réalisé en déplaçant d'abord le demi-crabot montant pour l'engager dans la roue dentée, puis le demi-crabot descendant pour l'engager dans la roue dentée.

Mais l'engagement du second rapport dans un sens descendant, c'est-à-dire en partant du troisième rapport, est réalisé en déplaçant d'abord le demi-crabot descendant pour l'engager, puis le demi-crabot montant.

Dans cette boîte de vitesses connue, chaque demi-crabot est déplacé par une fourchette correspondante, et il est mobile entre une position d'engagement dans une roue dentée, une position neutre, et une position d'engagement dans une autre roue dentée.

Ainsi, cette boîte de vitesses connue comprend en moyenne, autant de fourchettes que de rapports, les fourchettes de deux demi-crabots d'une même paire doivent être déplacées l'une après l'autre dans un ordre qui dépend de la situation, selon qu'il s'agit d'un changement montant ou descendant.

En cas d'engagement d'un rapport dans un sens montant, c'est la fourchette du demi-crabot montant qui doit être déplacée d'abord, mais dans l'autre cas, c'est la fourchette du demi-crabot descendant qui doit être déplacée en premier lieu.

Plus généralement, une telle boîte de vitesses comprend le double de fourchettes d'une boîte de vitesses classique dans lequel le nombre de fourchette vaut sensiblement la moitié du nombre de rapports.

Ces nombreuses fourchettes doivent être déplacées selon une multitude de séquences possibles, attendu notamment que pour un même rapport, la séquence diffère selon qu'il s'agit d'un passage montant ou descendant.

Ces séquences ne peuvent pas être obtenues en déplaçant ces fourchettes avec un barillet de commande rotatif classique, comprenant par exemple des gorges courbes recevant chacune un doigt d'une fourchette.

Une solution pour piloter une telle boite de vitesses est de recourir à un nombre élevé d'actionneurs, par exemple un actionneur par fourchette, les déplacements étant alors asservis par une unité de commande pour assurer les multiples séquences possibles.

Le nombre important d'actionneurs et leurs systèmes d'asservissement correspondants induisent un surcoût de conception et de fabrication rendant une telle boîte de vitesses peu compétitive en termes de prix.

Le but de l'invention est de proposer une boîte de vitesses robotisée comprenant un organe de commande permettant de piloter une telle boîte de vitesses avec seulement deux actionneurs.

A cet effet, l'invention a pour objet une boîte de vitesses comprenant au moins un moyen de transmission de mouvement mobile en translation parallèlement à un axe, et un organe de commande dudit moyen de transmission de mouvement comprenant un corps pourvu d'au moins une gorge dans laquelle est engagé ledit moyen de transmission de mouvement, pour son déplacement en translation selon la direction de l'axe sur déplacement de l'organe de commande, caractérisé en ce que le corps de l'organe de commande porte un coulisseau mobile parallèlement à l'axe entre au moins deux positions, ce coulisseau portant au moins un masque apte à couvrir partiellement la gorge pour définir complémentairement avec cette gorge au moins deux pistes formant des chemins différents pour guider le moyen de transmission de mouvement, selon que ce coulisseau occupe une première ou une seconde position.

L'invention concerne également une boîte de vitesses telle que définie ci-dessus, dans laquelle le corps de l'organe de commande comprend une première et une seconde rainures parallèles traversant la paroi du corps tubulaire, et dans laquelle chaque masque comprend une première et une seconde partie distinctes portées respectivement par un premier et un second pied traversant respectivement la première et la seconde rainure, deux parties d'un masque étant séparées l'une de l'autre par une zone médiane correspondant à l'espace séparant les deux rainures.

L'invention concerne également une boîte de vitesses telle que définie ci-dessus, dans laquelle le coulisseau porte au moins deux caches symétriques par rapport à un plan normal à l'axe.

L'invention concerne également une boîte de vitesses telle que définie ci-dessus, dans laquelle le corps de l'organe de commande comprend au moins deux gorges recevant deux moyens de transmission de mouvement distincts, et au moins deux masques aptes à couvrir partiellement chacun une gorge, ces masques ayant des formes distinctes pour déplacer les deux moyens de transmission de mouvement distincts l'un après l'autre sur déplacement de l'organe de commande.

L'invention concerne également une boîte de vitesses telle que définie ci-dessus, dans laquelle chaque gorge comprend deux rampes, et dans laquelle chaque masque comprend deux rampes.

L'invention concerne également une boîte de vitesses telle que définie ci-dessus, dans laquelle les rampes des gorges s'étendent sur une amplitude correspondant à la demi largeur de la gorge, et dans laquelle les rampes des masques s'étendent sur une amplitude correspondant à la largeur de la gorge.

L'invention concerne également une boîte de vitesses telle que définie ci-dessus, dans laquelle l'organe de commande est un barillet mobile en rotation autour de l'axe et en ce que le ou les moyens de transmission de mouvement sont des fourchettes munies chacune d'un doigt s'engageant dans la ou les gorges correspondantes.

L'invention concerne également une boîte de vitesses telle que définie ci-dessus, dans laquelle le corps de l'organe de commande a une forme générale tubulaire pourvue d'au moins une rainure longitudinale traversant la paroi du corps tubulaire, et dans laquelle le coulisseau comprend un noyau engagé dans le corps tubulaire, et un masque porté par un pied radial traversant la rainure.

L'invention concerne également une boîte de vitesses telle que définie ci-dessus, dans laquelle l'organe de commande est une première grille mobile en translation selon une direction perpendiculaire à l'axe et dans laquelle le ou les moyens de transmission de mouvement sont des fourchettes munies chacune d'un doigt s'engageant dans la ou les gorges correspondantes.

L'invention concerne également une boîte de vitesses telle que définie ci-dessus, dans laquelle le coulisseau est une deuxième grille superposée à la première grille.

L'invention concerne également une boîte de vitesses telle que définie ci-dessus, caractérisé en ce que la rapidité du déroulement des différentes séquences du changement de rapport de la boîte est gérée par la vitesse de rotation de l'organe de commande, le mouvement de présélection du moyen de transmission de mouvement se faisant lorsque l'organe de commande est en position extrême ou médiane et ce selon le sens de transmission du couple passé par la boîte de vitesses.

L'invention sera maintenant décrite plus en détail, et en référence aux figures annexées.
La figure 1 est une vue d'ensemble et en perspective du barillet de la boîte de vitesses selon l'invention ;
La figure 2 est une vue d'ensemble du barillet selon l'invention avec les masques représentés en projection cylindrique ;
Les figures 3 à 8 illustrent une séquence d'engagement du premier rapport dans un sens montant avec le barillet selon l'invention ;
Les figures 9 à 15 illustrent une séquence d'engagement du quatrième rapport dans un sens montant avec le barillet selon l'invention.

L'idée à la base de l'invention est de concevoir un actionneur comprenant une première grille mobile capable de déplacer toutes les fourchettes de la boîte de vitesses lorsqu'elle est déplacée sur une amplitude maximale, et portant une seconde grille pouvant occuper plusieurs positions distinctes par rapport à la première pour déplacer sélectivement une ou plusieurs fourchettes sur déplacement de la première grille.

La première grille est par exemple un corps de l'organe de commande comprenant des gorges de guidage, la seconde grille peut se présenter sous forme d'un coulisseau portant des masques et mobile par rapport au corps de l'organe de commande.

L'invention peut être mise en oeuvre sous forme d'un organe de commande dans lequel les deux grilles sont mobiles en translation. Elle peut également être mise en oeuvre, comme dans la description qui suit, sous forme d'un organe de commande comprenant un corps de barillet rotatif pourvu de gorges formant la première grille, et portant un coulisseau pourvu de masques définissant la seconde grille.

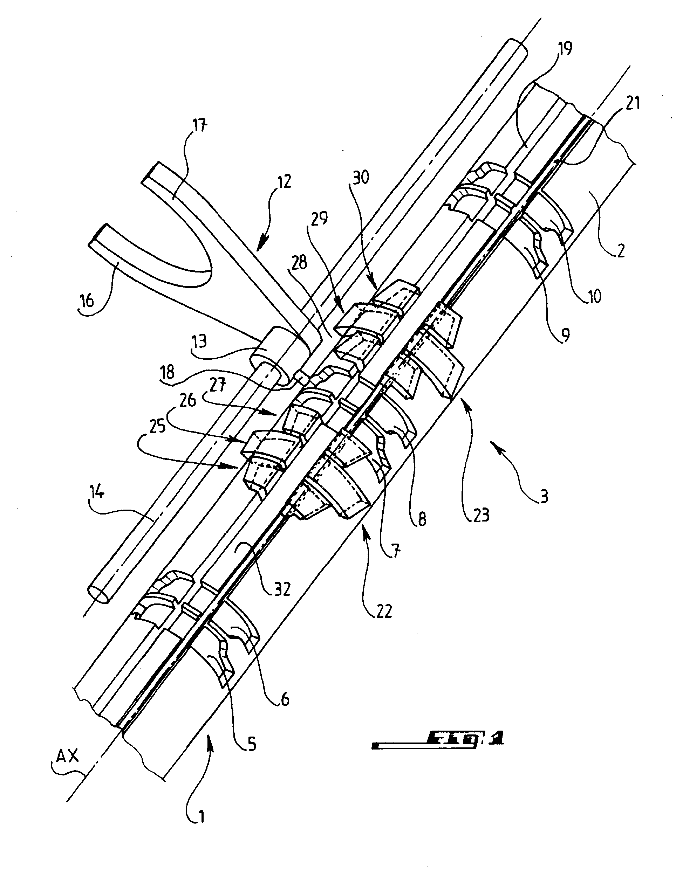

Le barillet 1 de la boîte de vitesses selon l'invention est représenté en figure 1. Il comprend un corps tubulaire 2 apte à pivoter autour d'un axe longitudinal AX, et un coulisseau repéré par 3, et apte à être déplacé longitudinalement par rapport au corps de barillet 2, entre plusieurs positions.

Le corps tubulaire 2 comprend ici six gorges, ayant chacune une forme générale d'arc de cercle réalisé à la surface externe du corps de barillet 2. Ces gorges sont parallèles entre elles et disposées par paires successives le long de l'axe AX en définissant trois paires.

La première paire comprend les gorges 5 et 6, la seconde paire comprend les gorges 7 et 8, et la troisième paire comprend les gorges 9 et 10. Deux gorges d'une même paire sont très proches l'une de l'autre le long de l'axe AX, alors que les gorges de deux paires différentes sont fortement espacées le long de l'axe AX. Chaque gorge est destinée à recevoir une fourchette de manière à la déplacer en translation sur rotation du barillet.

Une telle fourchette est représentée en figure 1 en étant repérée par 12, elle comprend un corps 13 coulissant le long d'un axe 14 parallèle à l'axe AX, ce corps portant deux branches 16 et 17 liées à un demi-crabot correspondant non représenté. Dans l'exemple de la figure, la fourchette 12 comprend un doigt 18 qui est engagé dans la gorge 8.

Le coulisseau 3 comprend un corps interne engagé dans le tube que constitue le corps 2 du barillet, ce corps interne portant six masques situés à l'extérieur de la surface externe du corps 2.

Plus particulièrement, le corps interne comprend plusieurs pieds s'étendant radialement par rapport à l'axe AX et portant chacun un demi-masque correspondant. Le corps 2 du barillet est pourvu de deux fentes longitudinales traversantes, repérées par 19 et 21, s'étendant parallèlement à l'axe AX.

Les pieds radiaux sont positionnés selon deux séries longitudinales correspondant chacune à une fente, chaque pied traversant ainsi une fente pour porter un demi-masque correspondant.

Comme visible sur la figure 1, le coulisseau 3 comprend un premier et un second triplet de masques, 22 et 23 rigidement solidaires du corps interne. Chaque triplet 22, 23 comprend trois masques, à savoir respectivement les masques 25, 26, 27, et 28, 29, 30.

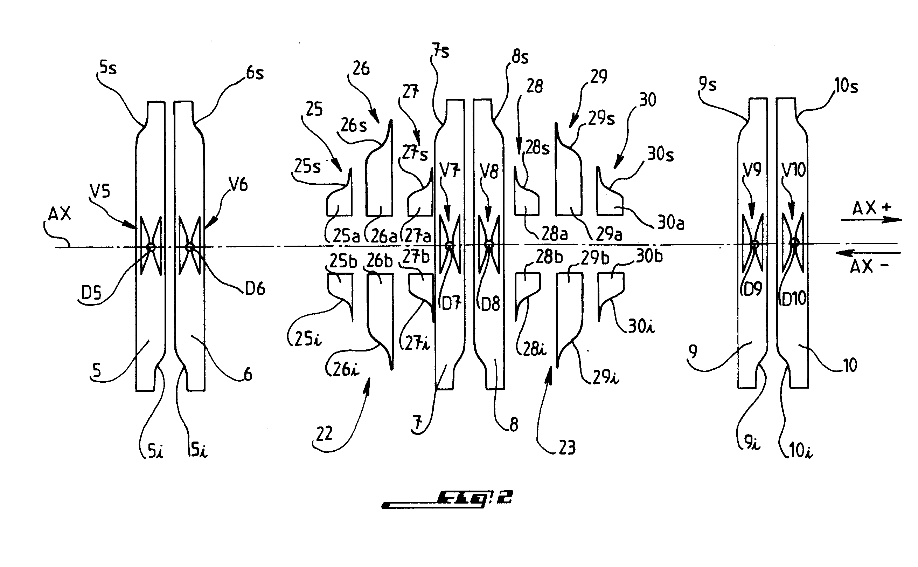

Chaque masque est divisé en deux demi-masques, respectivement 25a, 25b, 26a, 26b, 27a, 27b, 28a, 28b, 29a, 29b, 30a, 30b, repérés dans la vue déployée de la figure 2. Les deux demi-masques d'un même masque sont symétriques l'un de l'autre par rapport à un plan contenant l'axe AX.

Les deux pieds radiaux portant les deux demi-masques d'un même masque sont espacés angulairement autour de l'axe AX, tout en étant situés au même niveau, longitudinalement par rapport à l'axe AX.

Les deux demi-masques d'un même masque sont ainsi séparés l'un de l'autre, autour de l'axe AX, par une partie médiane 32 du corps de barillet 2. Cette partie médiane du corps de barillet est celle qui sépare les deux fentes longitudinales 19 et 21.

Les gorges du corps de barillet 2 ainsi que les masques du coulisseau 3, qui sont visibles en perspective dans la figure 1 apparaissent dans la vue à plat de la figure 2, qui est une projection cylindrique d'axe AX du barillet de la figure 1, montrant plus clairement les contours de ces différents éléments.

Les gorges ont des longueurs identiques, perpendiculairement à l'axe AX. Chaque gorge a un contour de forme générale rectangulaire, définissant deux sommets opposés formant angle droit, et deux rampes de guidage inclinées et légèrement courbes, situées au niveau des deux autres sommets opposés.

Les gorges 5 et 6 correspondent aux fourchettes des demi-crabots respectivement descendant et montant du premier rapport, et aux fourchettes des demi-crabots respectivement montant et descendant du second rapport.

Il est à noter que la fourchette commandant le demi-crabot descendant du premier rapport est la même que celle du demi-crabot montant du second rapport. De même, celle du demi-crabot montant du premier rapport est la même que celle du demi-crabot descendant du second rapport.

Les gorges 7 et 8 correspondent de même aux fouchettes des deux demi-crabots des troisième et quatrième rapports. Les gorges 9 et 10 correspondent de façon analogue aux fourchettes des demi-crabots des cinquième et sixième rapports.

Dans la figure 2, on a représenté les doigts des six fourchettes engagés dans les gorges correspondantes, ces doigts étant repérés par D5 à D10 en étant engagés respectivement dans les gorges 5 à 10.

Les rampes de guidage, dites supérieures, de ces gorges, c'est-à-dire situées au dessus de l'axe AX dans la figure 2 sont repérées respectivement par 5s, 6s, 7s, 8s, 9s et 10s. De manière analogue, les rampes de guidage inférieures de ces gorges, c'est-à-dire situées au dessous de l'axe AX dans la figure 2 sont repérées par 5i, 6i, 7i, 8i, 9i et 10i.

Grâce à ces rampes de guidage, un aller-retour complet en rotation barillet permet de placer chaque fourchette dont le doigt est engagé dans une gorge non couverte par un masque en position centrale par rapport à la gorge.

Ainsi, après un aller-retour complet en rotation du barillet, lorsque le coulisseau occupe une position telle que les masques ne couvrent aucune gorge, tous les crabots sont en position neutre, c'est-à-dire que la boîte de vitesses est au neutre ou point mort.

Comme visible dans cette figure, chaque gorge est pourvue d'un dispositif d'inter verrouillage. Ces dispositifs qui sont repérés respectivement par V5, V6, V7, V8, V9, sont tous situés au niveau de la partie médiane 32 du corps de barillet 2.

Chaque dispositif d'inter verrouillage permet de bloquer un doigt en translation parallèlement à l'axe AX, dans une position donnée, lorsque le barillet occupe une position médiane en rotation, c'est-à-dire une position pour laquelle les doigts des différentes fourchettes sont tous situés à hauteur de la partie médiane 32.

Grâce à ces dispositifs d'inter verrouillage, chaque doigt d'une fourchette peut être bloqué, contre l'un ou l'autre des bords de la gorge dans laquelle il est engagé, soit à mi-distance de ces deux bords, c'est-à-dire au niveau du milieu de la gorge dans laquelle il est engagé.

Ainsi, lorsque les masques ne couvrent aucune gorge, un aller-retour complet en rotation du barillet, suivi d'une mise en position médiane permet de positionner et de bloquer tous les doigts en position médiane.

Le premier triplet de masques 22 comprend trois masques espacés les uns des autres le long de l'axe AX. Chaque masque a, perpendiculairement à l'axe AX dans la projection de la figure 2, une longueur inférieure à la longueur des gorges.

Ce premier triplet comprend plus particulièrement un premier masque 25 de faible longueur ou petit masque, un second masque 26 de forte longueur ou grand masque, et un troisième masque 27 de faible longueur qui est identique au premier masque.

Le second triplet de masques 23 comprend lui aussi trois masques, il est symétrique du premier triplet par rapport à un plan de symétrie normal à l'axe AX.

Chaque demi-masque a un contour de forme générale trapézoïdale comprenant trois côtés perpendiculaires les uns aux autres, et un quatrième côté oblique et courbe, formant rampe de guidage. La rampe de guidage correspond au côté du trapèze qui est le plus éloigné de l'axe AX dans la projection de la figure 2.

Comme pour le cas des gorges, les rampes supérieures de chaque masque sont repérées par le signe de référence du masque concerné complétée par le signe s, et les rampes inférieures des masques sont repérées par le signe de référence du masque concerné, complété par le signe i.

Le coulisseau 3 peut être déplacé en translation le long de l'axe AX pour couvrir sélectivement et partiellement les gorges de l'une ou l'autre des paires de gorges du corps de barillet 2.

Par exemple, la première paire de gorges, c'est-à-dire celle qui comprend les gorges 5 et 6, peut être partiellement couverte soit par les masques du premier triplet 22, soit par les masques du second triplet 23.

Lorsqu'un triplet couvre cette paire de gorge, il peut être positionné, soit de telle manière que le grand masque 26 ou 29 couvre partiellement la gorge 5 et que le petit masque 27 ou 30 couvre partiellement la gorge 6, soit de telle manière que le grand masque 26 ou 29 couvre partiellement la gorge 6 et que le petit masque 25 ou 28 couvre partiellement la gorge 5,

Chacune des trois paires de gorges peut ainsi être partiellement couverte par le premier ou le second triplet, dans deux configurations distinctes, de sorte que le coulisseau peut occuper jusqu'à douze positions longitudinales de recouvrement distinctes.

Ce coulisseau peut également occuper une position dite effacée, correspondant à la situation de la figure 2, dans laquelle le premier triplet 22 est situé entre la première et la seconde paire de gorges, le second triplet 23 étant situé entre la seconde et la troisième paire de gorges.

Lorsqu'une gorge est partiellement couverte par un masque occupant la position appropriée, elle définit, conjointement avec ce masque, un chemin de guidage du doigt engagé dans cette gorge.

Lorsque cette gorge est partiellement couverte par un masque de forme différente, elle définit, conjointement avec cet autre masque, un autre chemin de guidage différent de celui obtenu avec le premier masque.

Comme visible dans les figures 1 et 2, les masques du premier triplet 22 ont des rampes qui sont toutes inclinées, par rapport à l'axe AX dans la projection de la figure 2, pour déplacer les fourchettes dans un sens dit positif, noté AX-, le long de l'axe AX lorsque les doigts de ces fourchettes viennent glisser contre ces rampes sur rotation du barillet.

Au contraire, le second triplet de masques 23, qui est le symétrique du premier triplet 22 par rapport à un plan normal à l'axe AX, comprend des rampes qui sont toutes inclinées pour déplacer les fourchettes dans un sens dit négatif, noté AX+, le long de l'axe AX lorsque les doigts de ces fourchettes viennent glisser contre ces rampes sur rotation du barillet.

Comme indiqué plus haut, le premier triplet 22 de masques peut être placé sur une paire de gorges dans au moins deux positions, pour placer le grand masque 26 soit sur une première gorge de cette paire, soit sur une seconde gorge de cette paire. La gorge non couverte par le grand masque 26 est alors partiellement couverte par le petit masque, 25 ou 27.

Sur rotation du barillet, la fourchette ayant un doigt engagé dans la gorge masquée par le grand masque est déplacée en premier lieu, dans le sens AX-, sur rotation du barillet. La fourchette ayant un doigt engagé dans la gorge masquée par le petit masque est déplacée en second lieu, dans le sens AX-.

De manière analogue, le second triplet 23 peut être placé sur une paire de gorges dans au moins deux positions, pour déplacer en premier lieu, soit une fourchette, soit l'autre, dans le sens AX+.

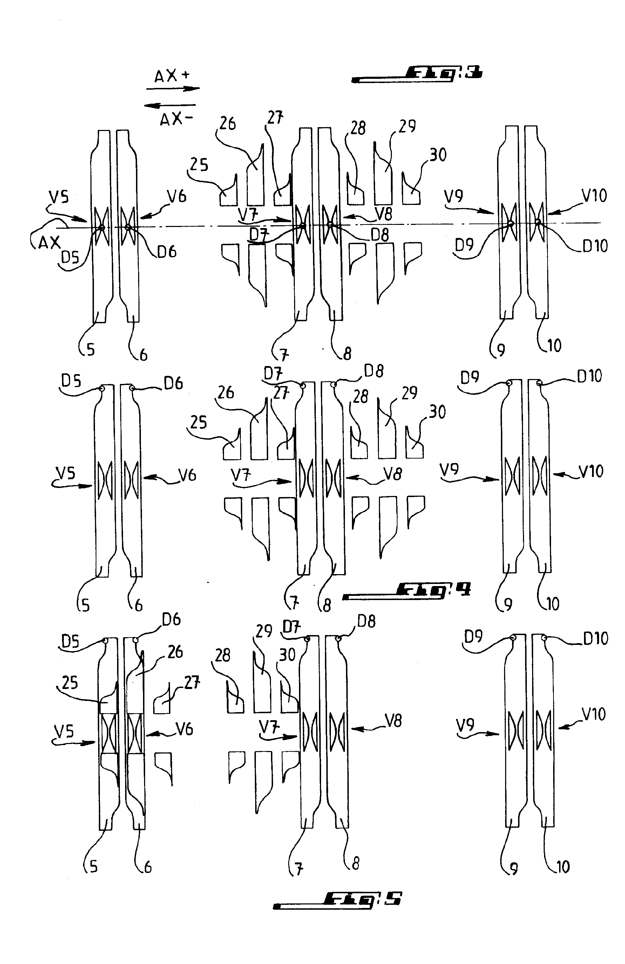

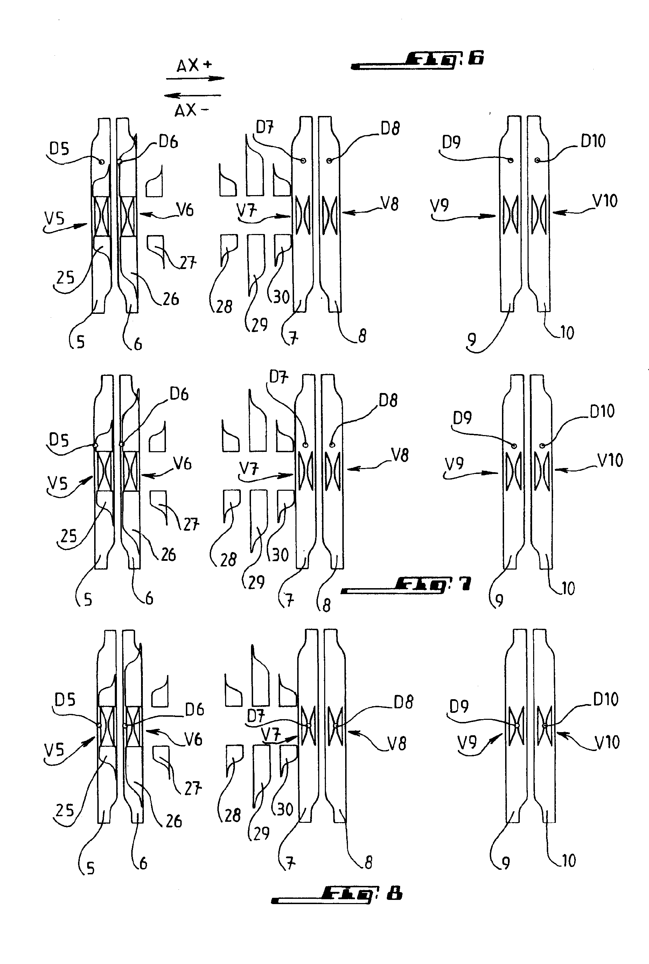

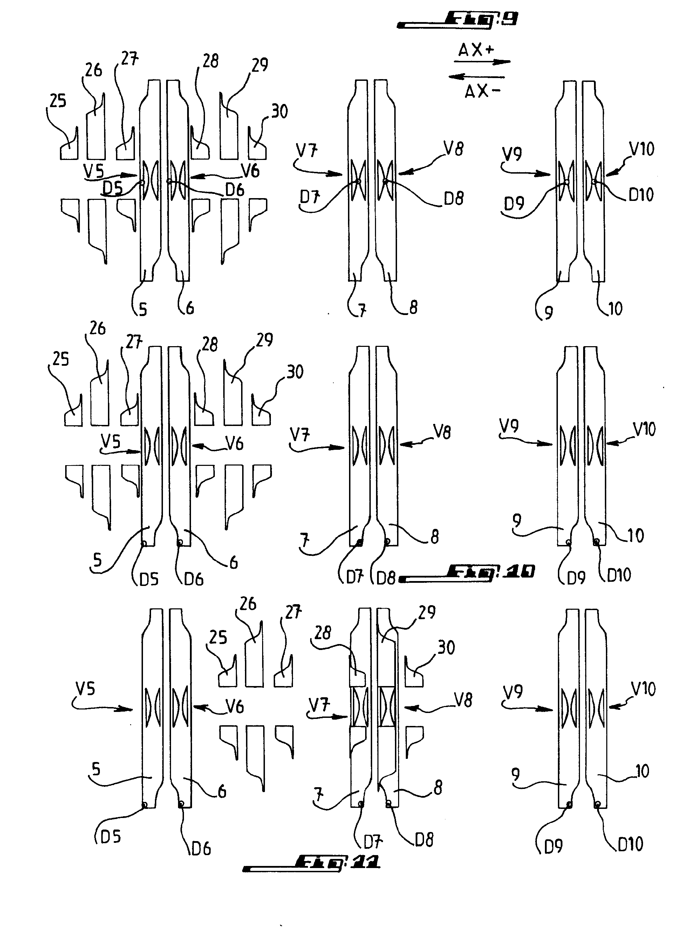

Une séquence d'engagement du premier rapport, à partir d'une position neutre, va maintenant être décrite en référence aux figures 3 à 8. En figure 3, le barillet occupe une position en rotation dite médiane, c'est-à-dire pour laquelle les doigts de toutes les fourchettes sont situés au niveau de la zone médiane 32.

Dans le cas de la figure 3, chaque doigt occupe une position centrale par rapport à la gorge dans laquelle il est engagé, en étant bloqué longitudinalement en position neutre par chaque dispositif d'inter verrouillage V5 à V10. Ainsi, tous les demi-crabots sont désengagés.

D'autre part, le coulisseau 3 occupe une position dite effacée, les triplets de masques 22 et 23 étant alors situés respectivement entre la paire de gorge 5 et 6 et la paire de gorge 7 et 8, et entre la paire de gorge 7 et 8 et la paire de gorge 9 et 10.

Le barillet est d'abord actionné pour pivoter dans le sens de rotation direct, en se référant au sens AX+, pour positionner les doigts D5 à D10 en extrémité des gorges correspondante 5 à 10 dans lesquelles ces doigts sont engagés, ce qui correspond à la situation de la figure 4.

Le coulisseau 3 est alors déplacé en translation dans la direction AX- pour placer le premier triplet de masques 22 sur la paire formée par les gorges 5 et 6, de telle façon que le grand masque 26 couvre partiellement la gorge 6, et que le petit masque 25 couvre partiellement la gorge 5, en vue de déplacer d'abord le doigt D6 puis le doigt D5.

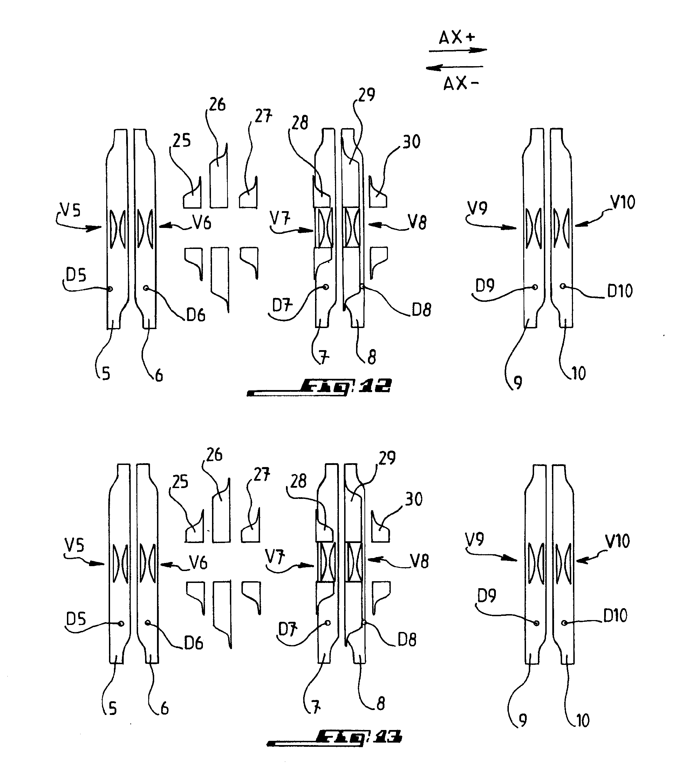

Le déplacement du doigt D6 a lieu en début de rotation du barillet dans le sens indirect par rapport au sens AX+, vers la position médiane de ce barillet. Ce déplacement du doigt D6, dans le sens AX- est provoqué par la venue en contact du doigt D6 sur la rampe 26s du masque 26, comme représentée sur la figure 6.

Ce déplacement provoque l'engagement du demi-crabot montant dans la roue dentée du premier rapport, cette roue dentée étant située à gauche de la gorge 5 sur les figures.

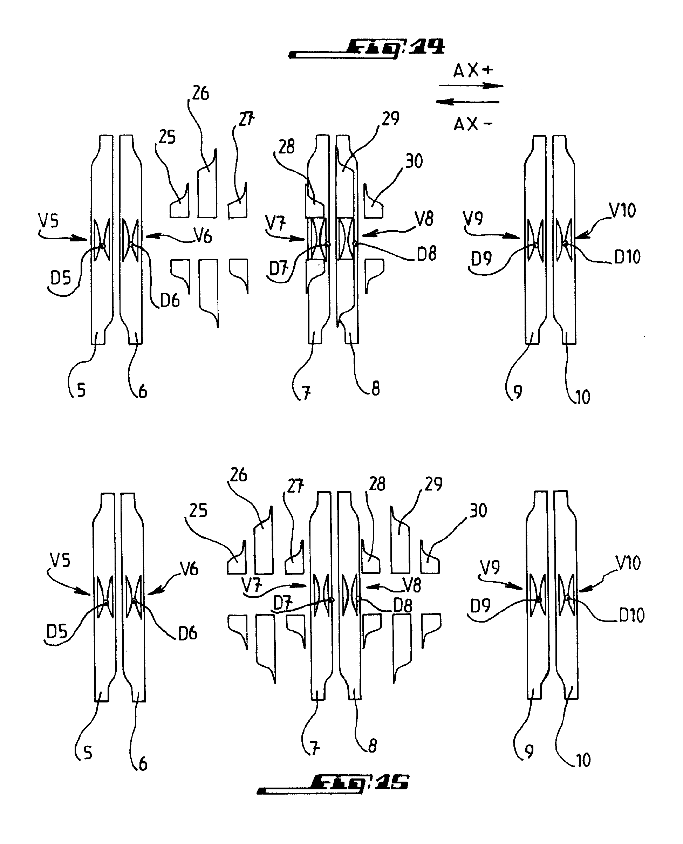

Comme visible sur la figure 7, après le déplacement du doigt D6, c'est le doigt D5 qui est déplacé, toujours dans le sens AX-, en glissant le long de la rampe inclinée 25s du petit masque 25.

Ce déplacement provoque l'engagement du demi-crabot descendant dans la roue dentée du premier rapport, qui est alors complètement bloquée en rotation par rapport à l'arbre la portant.

Le mouvement de rotation du barillet est ensuite terminé en l'immobilisant en position médiane, ce qui est le cas de la figure 8, les différents doigts D5 à D10 étant alors bloqués par les dispositifs d'inter verrouillage V5 à V10, dans leurs positions neutres ou engagées respectives, comme représenté en figure 8.

Une séquence de passage du premier au quatrième rapport va maintenant être décrite en référence aux figures 9 à 15.

Partant de la situation de la figure 8, le coulisseau peut alors être déplacé en translation pour occuper la position de la figure 9 dans laquelle les triplets 22 et 23 sont situés de part et d'autre des gorges 5 et 6.

Ceci permet de faire tourner le barillet dans le sens indirect vis-à-vis de l'orientation AX+, pour placer les doigts D5 à D10 en extrémité inférieure des gorges 5 à 10 dans lesquelles ils sont engagés, comme c'est le cas dans la figure 10.

Ce mouvement, pour atteindre la position de la figure 10, a pour effet de déplacer le doigt D6 dans le sens AX+, vers la position neutre lorsque celui-ci vient glisser contre la rampe inférieure 6i de la gorge 6. Ceci correspond au désengagement du demi-crabot montant de la roue dentée du premier rapport.

Le coulisseau 3 est alors déplacé pour positionner le second triplet 23 de masques sur la paire de gorges 7 et 8. Comme le montre la figure 11, le coulisseau 3 est plus particulièrement positionné de telle manière que le grand masque 29 couvre partiellement la gorge 8, la gorge 7 étant alors partiellement couverte par le petit masque 28, et ce, en vue de déplacer en premier lieu le doigt D8, dans le sens AX+ parallèlement à l'axe AX.

Le barillet est ensuite actionné en rotation pour déplacer d'abord le demi-crabot montant, dans le sens AX+, de manière à l'engager dans la roue dentée du quatrième rapport, ce qui correspond à la figure 12.

A la suite de cet engagement, l'arbre portant les roues dentées tourne au même régime que la roue dentée du quatrième rapport. Compte tenu de ce changement de régime, le demi-crabot descendant du premier rapport, c'est-à-dire celui correspondant au doigt D5 se désengage spontanément de la première roue dentée, ce qui conduit à la situation de la figure 13.

Le demi-crabot montant du quatrième rapport, correspondant au doigt D7 est ensuite déplacé par la rampe s28 du petit masque 28, lorsque le barillet termine sa rotation pour atteindre la position médiane, comme dans la figure 14.

Le coulisseau 3 est alors déplacé pour être placé en position d'effacement correspondant à celle de la figure 15.

L'invention apporte notamment les avantages suivants :

Elle permet de commander une multitude de fourchettes entre trois positions chacune, et selon une multitude de séquences distinctes, à partir d'uniquement deux actionneurs.

Comme le montrent les séquences ci-dessus, chaque changement de rapport peut être réalisé en effectuant un seul aller-retour de barillet entre la position médiane et l'une de ses positions extrêmes en rotation, en déplaçant le coulisseau en translation lorsque le barillet occupe une position extrême en rotation.

Le passage au point mort peut être réalisé à tout moment en plaçant le barillet en position d'effacement, et en provoquant un aller retour complet du barillet.

La rapidité du déroulement des différentes séquences du changement de rapport est gérée par la vitesse de rotation du barillet, le mouvement de présélection du doigt se faisant lorsque le barillet est en position extrême ou médiane.

De plus, l'actionneur de boîte de vitesses selon l'invention présente une compacité peu pénalisante puisqu'il a un encombrement général correspondant à celui d'un barillet classique de forme généralement cylindrique.

Il est à noter que dans l'exemple décrit ci-dessus, l'organe de commande est exploité pour piloter une boîte de vitesses robotisée du type de celui décrit dans le document WO2004099654.

L'invention n'est cependant en rien limitée à cette application : elle permet de manière générale de piloter avec uniquement deux actionneurs, les déplacements d'un nombre élevé de fourchettes mobiles, ou tout autre moyen de transmission de mouvement équivalent, entre trois positions chacune, et selon des séquences très diverses, tout en différenciant l'engagement ou le désengagement d'un ou deux rapports selon le sens de transmission du couple passé par la boîte de vitesses.

De plus, sans sortir du cadre de la présente invention, le système de barillet et coulisseau (ou double barillet) selon l'invention peut être étendu à un système de "double grille" (par analogie au double barillet).

En effet, on conçoit très facilement une extension de la présente invention à un système comportant une première grille et une deuxième grilles superposées selon deux plans parallèles, les première et deuxième grilles remplissant respectivement les mêmes fonctions que le barillet et le coulisseau précédemment décrits , et en remplaçant le mouvement de rotation du barillet par une translation de la première grille selon une direction perpendiculaire au déplacement de la deuxième grille.

Pour la représentation graphique de cette double grille, on se rapportera aux figures 2 à 15 qui correspondent aux vues en projection cylindrique du barillet et du coulisseau associé.

## Revendications

1. Boîte de vitesses comprenant au moins un moyen de transmission de mouvement (12) mobile en translation parallèlement à un axe (AX), et un organe de commande dudit moyen de transmission de mouvement comprenant un corps (2) pourvu d'au moins une gorge (5-10) dans laquelle est engagé ledit moyen de transmission de mouvement (12), pour son déplacement en translation selon la direction de l'axe (AX) sur déplacement de l'organe de commande, le corps (2) de l'organe de commande portant un coulisseau (3) mobile parallèlement à l'axe (AX) entre au moins deux positions, ce coulisseau (3) portant au moins un masque (25-30) apte à couvrir partiellement la gorge (5-10) pour définir complémentairement avec cette gorge au moins deux pistes formant des chemins différents pour guider le moyen de transmission de mouvement (D8), selon que ce coulisseau (3) occupe une première ou une seconde position, **caractérisée en ce que** le corps de l'organe de commande (2) comprend une première et une seconde rainures parallèles (19, 21) traversant la paroi du corps tubulaire (2), chaque masque (25-30) comprenant une première et une seconde partie distinctes (25a-30a, 25b-30b) portées respectivement par un premier et un second pied traversant respectivement la première et la seconde rainure (19, 20), deux parties d'un masque (25a-30a, 25b-30b) étant séparées l'une de l'autre par une zone médiane (32) correspondant à l'espace séparant les deux rainures (19, 20).

2. Boîte de vitesses selon la revendication 1, dans laquelle le coulisseau (3) porte au moins deux caches symétriques par rapport à un plan normal à l'axe (AX).

3. Boîte de vitesses selon l'une quelconque des revendication précédentes, dans laquelle le corps de l'organe de commande (2) comprend au moins deux gorges (5-10) recevant deux moyens de transmission de mouvement distincts (D5-D10), et au moins deux masques (25-20) aptes à couvrir partiellement chacun une gorge (5-10), ces masques ayant des formes distinctes pour déplacer les deux moyens de transmission de mouvement distincts (D5-D10) l'un après l'autre sur déplacement de l'organe de commande.

4. Boîte de vitesses selon l'une quelconque des revendications précédentes, dans laquelle chaque gorge (5-10) comprend deux rampes (5s-10s, 5i-10i), et dans laquelle chaque masque (25-20) comprend deux rampes (25s-30s, 25i-30i).

5. Boîte de vitesses selon la revendication 4, dans laquelle les rampes (5s-10s, 5i-10i) des gorges (5-10) s'étendent sur une amplitude correspondant à la demi largeur de la gorge, et dans laquelle les rampes des masques s'étendent sur une amplitude correspondant à la largeur de la gorge.

6. Boîte de vitesses selon l'une quelconque des revendications précédentes, dans laquelle l'organe de commande est un barillet (1) mobile en rotation autour de l'axe (AX) et en ce que le ou les moyens de transmission de mouvement sont des fourchettes munies chacune d'un doigt (D5-D10) s'engageant dans la ou les gorges correspondantes.

7. Boîte de vitesses selon la revendication 6, dans laquelle le corps de l'organe de commande (2) a une forme générale tubulaire pourvue d'au moins une rainure longitudinale (19, 21) traversant la paroi du corps tubulaire, et dans laquelle le coulisseau (3) comprend un noyau engagé dans le corps tubulaire (2), et un masque (25-30) porté par un pied radial traversant la rainure.

8. Boîte de vitesses selon l'une quelconque des revendication 1 à 5, dans laquelle l'organe de commande est une première grille mobile en translation selon une direction perpendiculaire à l'axe (AX) et dans laquelle le ou les moyens de transmission de mouvement sont des fourchettes munies chacune d'un doigt (D5-D10) s'engageant dans la ou les gorges correspondantes.

9. Boîte de vitesses selon la revendication 8, dans laquelle le coulisseau (3) est une deuxième grille superposée à la première grille.

10. Boîte de vitesses selon l'une quelconque des revendications précédentes, **caractérisée en ce que** la rapidité du déroulement des différentes séquences du changement de rapport de la boîte est gérée par la vitesse de rotation de l'organe de commande, le mouvement de présélection du moyen de transmission de mouvement se faisant lorsque l'organe de commande est en position extrême ou médiane et ce selon le sens de transmission du couple passé par la boîte de vitesses.
